# EUROPEAN PATENT APPLICATION

(11) **EP 2 654 227 A1**
(43) Date of publication of application: **23.10.2013**
(21) Application number: 12805554.8
(22) Date of filing: 23.02.2012
(51) Int. Cl.: H04J 14/02, H04B 10/03

(54) **OPTICAL ADD-DROP MULTIPLEXER BRANCH UNIT AND CONTROL METHOD THEREOF**

(71) Applicant: Huawei Marine Networks Co., Limited, Tianjin 300457 (CN)
(72) Inventor: ZHANG, Wendou, Shenzhen, Guangdong 518129 (CN)
(74) Representative: Goddar, Heinz J.
(86) International application number: PCT/CN2012/071546
(87) International publication number: WO 2013/123665

(57) **Abstract**

An optical add-drop multiplexer branching unit and its control method are provided according to the present invention. The optical add-drop multiplexer branching unit includes: 4 wavelength division multiplexers WDM1 to WDM4 and a first optical switch module, where WDM1-WDM4 are configured to divide or combine wavelengths of signals; the first optical switch module is configured to control connection and disconnection of signals that leave and enter the WDM; the first optical switch module includes port 1 to port 4; the ports are connected with input ports or output ports of WDM1 to WDM4, respectively; states of internal connection between the ports include state 1 and state 2; in state 1, port 1 is connected with port 2, and port 3 is connected with port 4; in state 2, port 3 is connected with port 2, or port 4 is connected with port 1, or port 3 is connected with port 2 and port 4 is connected with port 1. The OADM BU in the foregoing solutions is characterized by simple structure, easy control, and high capability of disaster recovery.

## Description

### FIELD OF THE INVENTION

The present invention relates to the field of optical communication, and in particular, to an optical add-drop multiplexer branching unit in a submarine cable network, and a control method of the optical add-drop multiplexer branching unit.

### BACKGROUND OF THE INVENTION

With rapid development of the information technology, the submarine cable network covers all sea areas across the globe. The submarine optical communication system is generally based on a dense wavelength division multiplexing (Dense Wavelength Division Multiplexing, DWDM) technology, and bears communication traffic of a Tbit/s magnitude or more, and has become a main communication network that bears the international communication traffic. As restricted by factors, such as cost and system reliability, a submarine cable system with a repeater generally accommodates 2-8 fiber pairs, and each fiber pair undertakes adding and dropping. To implement connection between finite multiple point-to-point fiber pairs, a BU (Branching Unit, branching unit) for adding and dropping fiber pairs may be applied in the network. For example, the OADM (Optical Add-Drop Multiplexer, optical add-drop multiplexer) BU is a BU for adding and dropping fiber pairs in the prior art. It can provide more flexible connectivity for the finite fiber pairs, and makes multiple sites share capacity on one fiber pair.

Although the OADM BU (optical add-drop multiplexer branching unit) reduces the cost of additional fiber pairs and reduces the transmission delay caused by traffic bypassing, the OADM BU in the prior art brings more difficulties and challenges to network design and management, especially in terms of disaster recovery and nonlinear management.

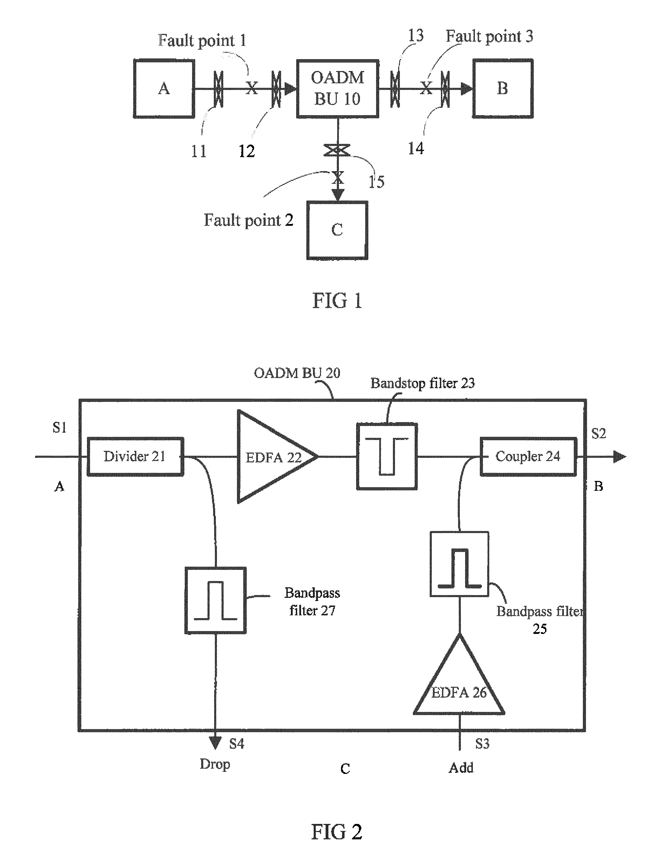

FIG 1 is a schematic diagram of a networking scenario of an OADM BU in the prior art. The submarine cable system in FIG. 1 includes three sites: A, B, and C for adding and dropping signals, an OADM BU 10, and optical repeaters 11-15 for repeating signals. The port of the OADM BU 10 on the side connected with the site is called side A, side B, and side C, depending on the context. The signals can pass through the OADM BU 10, and travel from site A to site B, or from site A to site C, or from site C to site B. A submarine cable system generally includes an add-drop fiber pair for bidirectional communication. Therefore, the signals can also pass through the same OADM BU 10, and travel from site B to site A, or from site B to site C, or from site C to site A. In FIG. 1, X is an illustrative fault point, and indicates a network fault, such as cable cut or electric leakage, or failure of the traffic light arriving at the preset side. The fault point 1 indicates a network fault between site A and the OADM BU 10; the fault point 2 indicates a network fault between site B and the OADM BU 10; and the fault point 3 indicates a network fault between site C and the OADM BU 10. Here, the network path between site A and site B is called a trunk, and the network path between site C and OADM BU 10 is a branch.

In FIG. 1, in the networking scenario of the OADM BU in the prior art, when a fault, such as cable cut or leakage (Shunt fault) occurs between site A and the OADM BU 10, the traffic light on side A is unable to reach the OADM BU 10, and the only surviving traffic on the path from the OADM BU 10 to site B is the traffic of adding waves on site C. When the submarine optical repeaters 13 and 14 work in a deeply saturated state, the total output power is constant. The loss of a pass-through traffic signal from site A to site B makes the traffic signal from site C to site B be amplified, and increases the single-wavelength optical power of the signals, which possibly leads to nonlinear transmission costs, deteriorates the system performance, and affects the normal communication between site C and site B.

Besides, the maintenance period of the submarine cable is generally one or two weeks. In the maintenance period, when side A needs to be powered off for safety reason, for example, it is essential to ensure normal traffic communication between site B and site C without increasing costs, such as without increasing standby fiber pairs. In this case, the OADM BU in the prior art is unable to ensure normal traffic communication between site B and site C.

The OADM BU in the prior art is complicated and defective in many aspects. For example, in the two circumstances above, the structure of the OADM BU leads to low capability of disaster recovery.

### SUMMARY OF THE INVENTION

Embodiments of the present invention provide an OADM BU to reduce impact caused by an optical cable fault onto communication between other branches of the OADM BU while simplifying the structure of the OADM BU.

An optical add-drop multiplexer branching unit OADM BU is provided, including 4 wavelength division multiplexers WDM1-WDM4 and a first optical switch module. WDM1-WDM4 are configured to divide and combine wavelengths of signals. The first optical switch module is configured to control connection and disconnection of signals that leave or enter the WDM; the first optical switch module includes port 1 to port 4; the ports are connected with input ports or output ports of WDM1 to WDM4, respectively; states of internal connection between ports include state 1 and state 2; in state 1, port 1 is connected with port 2, and port 3 is connected with port 4; in state 2, port 3 is connected with port 2, or port 4 is connected with port 1, or port 3 is connected with port 2 and port 4 is connected with port 1; the first optical switch module is set to state 1 when an input signal of the optical add-drop multiplexer branching unit is detected as normal, or the first optical switch module is set to state 2 when an input signal of the optical add-drop multiplexer branching unit is detected as faulty.

Further, a control method of the foregoing optical add-drop multiplexer branching unit is provided. The method includes: setting a first optical switch module to state 1 when a signal input into an optical add-drop multiplexer branching unit is determined as normal; setting the first optical switch module to state 2 when a signal input into the optical add-drop multiplexer branching unit is determined as faulty.

In the technical solutions provided above, an OADM BU in a submarine OADM system is provided; the OADM BU provides the features of simple structure and easy control, and the control method of the OADM BU is characterized by simplicity, little consumption of power, little occupation of space, and high capability of disaster recovery without depending on additional standby fiber pairs.

### BRIEF DESCRIPTION OF THE DRAWINGS

To make the technical solutions in the embodiments of the present invention clearer, the accompanying drawings used in description of the embodiments or the prior art are briefly described hereunder. Apparently, the accompanying drawings illustrate only some exemplary embodiments of the present invention, and persons of ordinary skill in the art can derive other drawings from these drawings without creative efforts.
FIG. 1 is a schematic diagram of a networking scenario of an OADM BU in the prior art;
FIG. 2 is a schematic structural diagram of an OADM BU capable of disaster recovery in the prior art;
FIG. 3 is a schematic structural diagram of an OADM BU capable of trunk disaster recovery according to an embodiment of the present invention;
FIG 4A to FIG. 4D are schematic diagrams of states of an optical switch module of an OADM BU according to an embodiment of the present invention;
FIG. 5 is a schematic structural diagram of an OADM BU capable of branch disaster recovery according to another embodiment of the present invention;
FIG. 6 is a schematic diagram of another optical switch module of an OADM BU according to an embodiment of the present invention;
FIG. 7A to FIG. 7D are schematic diagrams of another optical switch module of an OADM BU according to an embodiment of the present invention;
FIG. 8A to FIG. 8C are schematic diagrams of using an OADM BU to implement trunk disaster recovery according to an embodiment of the present invention;
FIG. 9A to FIG 9B are schematic diagrams of using an OADM BU to implement branch disaster recovery according to an embodiment of the present invention;
FIG. 10A to FIG. 10B are schematic diagrams of using an OADM BU to implement branch disaster recovery according to another embodiment of the present invention; and
FIG 11 is a flowchart of a control method of an OADM BU according to an embodiment of the present invention.

### DETAILED DESCRIPTION OF THE EMBODIMENTS

The technical solutions in the embodiments of the present invention are elaborated clearly and completely below with reference to accompanying drawings in the embodiments of the present invention. Evidently, the embodiments described below are only some rather than all embodiments of the present invention. Based on the embodiments of the present invention, all other embodiments obtained by persons of ordinary skill in the art without making any creative effort shall fall within the protection scope of the present invention.

The terms "system" and "network" in this document can always be exchanged for use in this document. The term "and/or" in this document is only an association relationship for describing associated objects, and represents that three relationships may exist, for example, A and/or B may represent the following three cases: A exists separately, and both A and B exist, and B exists separately. In addition, the character "/" in this document usually represents that the former and later associated objects are in a "or" relationship.

The networking scenario of the OADM BU in this embodiment of the present invention is the same as the networking scenario of the OADM BU in the prior art.

FIG 2 is a schematic structural diagram of a control method of an OADM BU 20 capable of disaster recovery in the prior art.

In normal circumstances, a WDM signal S1 is input from side A, and is divided into two parts after passing through a divider 21. One part is amplified by an EDFA (Erbium Doped Fiber Amplifier, erbium doped fiber amplifier) 22, and then passes through a band block filter 23, in which traffic of specific wavelengths is stopped, and signals of remaining wavelengths pass through a coupler 24 and arrive at side B; the other part of WDM signals output by the divider 21 is filtered by a bandpass filter 27, and then a traffic signal S4 of a specific wavelength (DROP signal, drop signal) output by the filter arrives at side C for dropping. Besides, from side C, a signal S3 of a specific wavelength (ADD signal, add signal) is amplified by an EDFA 26, and then passes through a bandpass filter 25, and finally, is coupled by a coupler 24 with a signal of a pass-through wavelength on side A, whereupon the coupled signal is output as S2 to side B.

For example, when a cable cut fault occurs on side A of an OADM BU, no input signal S1 exists on side A. In this case, a system controls the EDFA 22 to output amplified spontaneous emission noise (ASE, Amplified Spontaneous Emission Noise) light, which is filtered by a band block filter 23. After the noise is filtered, power of the noise is equal to the total power of the WDM signal that is filtered by a band block filter 23 in normal circumstances. Afterward, the filtered noise is coupled by a coupler 24 with signal light S3 that is filtered by a bandpass filter 25 on side B. In this way, the percentage of the power of add (ADD) signal light to total optical power remains unchanged, the original power level of the signal is maintained in a link, and transmission performance keeps stable.

Similarly, when a cable cut fault occurs on side C of an OADM BU, no input signal S3 exists at the add (ADD) port on side C. In this case, the system controls the EDFA 26 to output amplified spontaneous emission noise light, which is filtered by a bandpass filter 25. After the noise is filtered, power of the noise is equal to the total power of the S3 (ADD) signal that is filtered by the bandpass filter 25 in normal circumstances. Afterward, the filtered noise is coupled by the coupler 24 with trunk signal light passed from side A. In this way, the percentage of the power of the pass-through signal light to the total optical power remains unchanged, the original power level of the signal is maintained in the link, and the transmission performance keeps stable.

In the technical solution above, for each fiber pair, 4 EDFAs (FIG. 2 shows only one direction from side A to side B, and from side C to side B) need to be integrated in the OADM. Each EDFA includes a coupler, an isolator, an erbium doped fiber, a gain flattening filter, a pump laser, a photodetector, and other optical components. The pump laser requires a complex drive circuit, which increases complexity of the device and leads to the following disadvantages:
- Greater space is required to accommodate plenty of optical components
- The EDFA brings spontaneous emission noise
- The product failure rate increases enormously
- The power consumption of the device increases and the heat dissipation is difficult
- The performance requirement of the integrated EDFAs depends on the number of added/dropped wavelengths, and the EDFAs need to be tailored for a specific scenario and are not universally applicable
- Only add/drop signals exist on branch C, and therefore, the optical repeater in the branch is different from that in the trunk, which increases the needed types of spare optical repeaters.

In view of the disadvantages of the foregoing technical solution, an embodiment of the present invention provides an OADM BU to overcome the disadvantages.

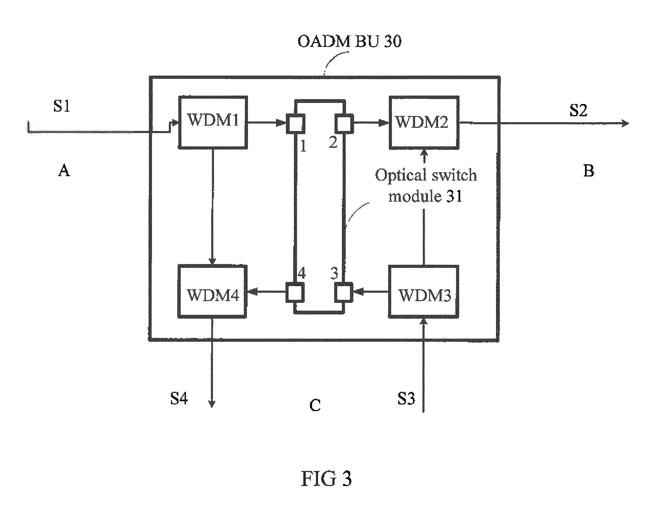

FIG. 3 is a schematic diagram of an OADM BU 30 capable of trunk disaster recovery according to an embodiment of the present invention.

The OADM BU 30 may be constituted by one or more basic units. As shown in FIG 3, the basic units include 4 wavelength division multiplexers WDM1 to WDM4, and an optical switch module 31. The optical switch module 31 is also referred to as a first optical switch module in certain context. The 4 wavelength division multiplexers have the same functions, to divide and combine wavelengths of signals. The signals may include, for example, add signal, drop signal, pass-through signal, and/or dummy signal. The optical switch module 31 can control connection and disconnection of the signals that leave or enter the WDM. The optical switch module 31 includes 4 ports, which are connected with the input ports or output ports of the WDMs. The connection relationship between the ports can be configured, and can be configured to at least two states.

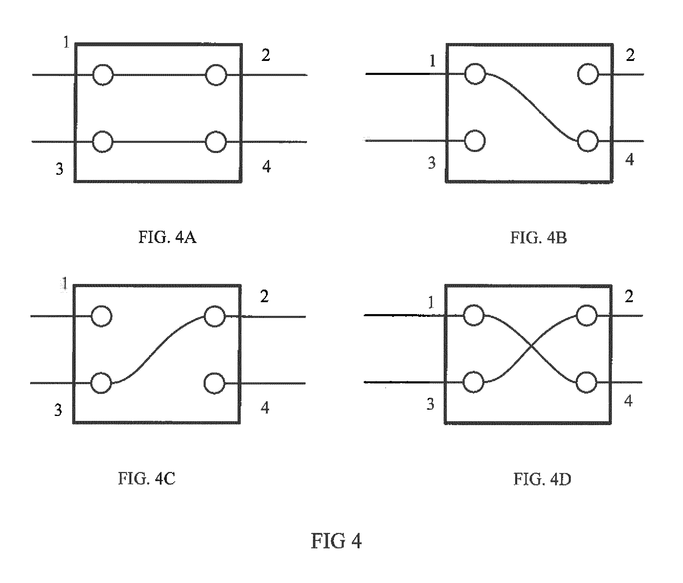

FIG. 4A to FIG 4D are schematic diagrams of states of an optical switch module 31 of an OADM BU according to an embodiment of the present invention. As shown in FIG 4A, state 1 is: port 1 is connected with port 2, and port 3 is connected with port 4. State 2 is one of the following three optional states: port 4 is connected with port 1, as shown in FIG. 4B; or port 3 is connected with port 2, as shown in FIG. 4C; or port 4 is connected with port 1 and port 3 is connected with port 2, as shown in FIG. 4D. The switch module of the OADM BU in this embodiment of the present invention is in one of at least two states, including state 1 and one of the states shown in FIG. 4B to FIG. 4D. As an implementation manner of the switch module of the OADM BU in this embodiment of the present invention, the switch module may be a switch component that is in one of the foregoing two states.

FIG. 3 shows the connection relationship between the optical switch module 31 and the 4 wavelength division multiplexers WDM1 to WDM4. The input port of WDM1 is connected with a first signal, output port 1 of WDM1 is connected with port 1 of the optical switch module 31, and output port 2 of WDM1 is connected with input port 1 of WDM4; input port 1 of WDM2 is connected with port 2 of the optical switch module 31, input port 2 of WDM2 is connected with output port 1 of WDM3, and the output port of WDM2 is connected with a second signal; the input port of WDM3 is connected with a third signal, output port 1 of WDM3 is connected with input port 2 of WDM2, and output port 2 of WDM3 is connected with port 3 of the optical switch module 31; input port 1 of WDM4 is connected with output port 2 of WDM1, input port 2 of WDM4 is connected with port 4 of the optical switch module 31, the output port of WDM4 is connected with a fourth signal, port 1 of the optical switch module 31 is connected with output port 1 of WDM1, port 2 of the optical switch module 31 is connected with input port 1 of WDM2, port 3 of the optical switch module 31 is connected with output port 2 of WDM3, and port 4 of the optical switch module 31 is connected with input port 2 of WDM4.

S1 in FIG 3 represents the first signal input from side A to the OADM BU 30, including the pass-through signal between side A and side B, and/or the drop signal from side A to side C. S2 is the second signal output from the OADM BU 30 to side B, including the pass-through signal between side A and side B, and/or the add signal from side C to side B. S3 is the third signal input from the add port on side C to the OADM BU 30, including an add signal and/or a dummy signal. S4 is the fourth signal output from the OADM BU 30 to the drop port on side C, including the drop signal and/or the dummy signal.

As shown in FIG 3, in normal circumstances, the pass-through signal is input from side A, passes through WDM1, and passes through the optical switch module 31 that is in state 1. In this case, port 1 is connected with port 2. The pass-through signal passes through WDM2, and is output from side B. The drop signal is input from side A, passes through WDM1, and then passes through WDM4, and is output from the drop port on side C. The add signal is input from the add port on side C, passes through WDM3, and then passes through WDM2 and is output from side B. The dummy signal is input from the add port on side C, passes through WDM3, passes through port 3 and port 4 that are connected with the optical switch module 31, and then passes through WDM4, and is output from the drop port on side C.

For example, when a cable cut fault occurs on side A, the pass-through signal and the drop signal are unable to arrive at side A of the OADM, and communication is interrupted between side A and side C, and between side A and side B. In this case, the signal from side C to side B is affected. For example, single-wavelength power is too high after the signal is amplified by a repeater. To keep normal communication between side C and side B, the state of the optical switch module 31 needs to switch to state 2. For example, a command (command) signal may be sent from side C or side B to the OADM BU to change the state of the optical switch module 31. In this case, a signal flow direction is as follows: The flow direction of the add signal keeps unchanged; the dummy light signal is input from the add port on side C, passes through WDM3, and then passes through the optical switch module 31. In this case, port 2 is connected with port 3. Afterward, the dummy light signal passes through WDM2, and is output from side B. In this case, after the add signal is output from side B, the percentage of the power of the signal to total optical power is the same as the percentage obtained in normal circumstances. Therefore, the original power level of the signal is maintained in a link, and transmission performance keeps stable. In this way, a trunk disaster recovery function on side A is implemented.

Through the OADM BU in a submarine OADM system in this embodiment of the present invention, the OADM BU provides the features of simple structure and easy control, and the control method of the OADM BU is characterized by simplicity, little consumption of power, little occupation of space, independency of the number of added or dropped wavelengths of an OADM, and high capability of disaster recovery.

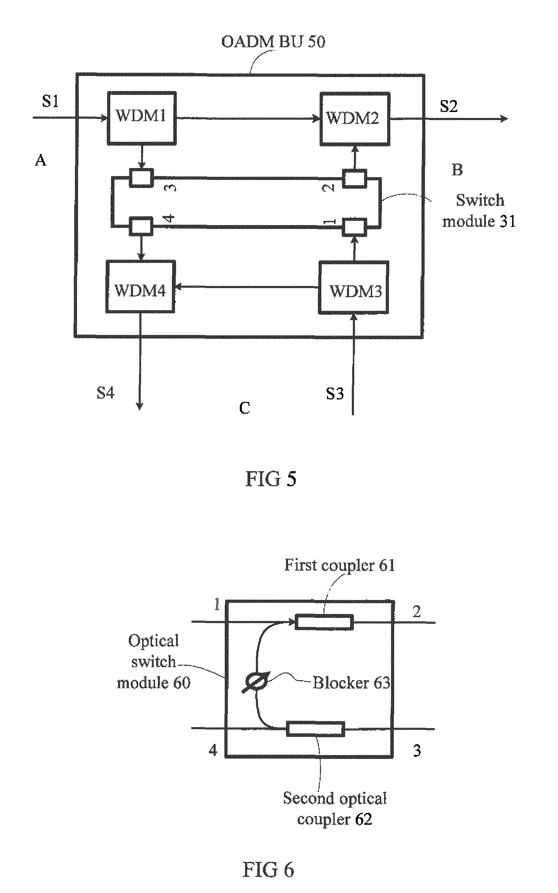

Similarly, according to another embodiment of the present invention, the connection relationship between the optical switch module 31 and the wavelength division multiplexer may be changed to implement a branch disaster recovery function. FIG. 5 is a schematic structural diagram of an OADM BU 50 capable of branch disaster recovery.

WDM1-WDM4 and the optical switch module 31 in the OADM BU 30 are the same as or similar to those in the OADM BU 50. The difference lies in the connection relationship between the WDM1-WDM4 and the optical switch module 31.

The input port of WDM1 is connected with a first signal, output port 1 of WDM1 is connected with the input port of WDM2, and output port 2 of WDM1 is connected with port 3 of the optical switch module 31; input port 1 of WDM2 is connected with output port 1 of WDM1, input port 2 of WDM2 is connected with port 2 of the optical switch module 31, and the output port of WDM2 is connected with a second signal; the input port of WDM3 is connected with a third signal, output port 1 of WDM3 is connected with port 1 of the optical switch module 31, and output port 2 of WDM3 is connected with input port 2 of WDM4; input port 1 of WDM4 is connected with port 4 of the optical switch module 31, input port 2 of WDM4 is connected with output port 2 of WDM3, and the output port of WDM4 is connected with a fourth signal; port 1 of the optical switch module 31 is connected with output port 1 of WDM3, port 2 of the optical switch module 31 is connected with input port 2 of WDM2, port 3 of the optical switch module 31 is connected with output port 2 of WDM1, and port 4 of the optical switch module 31 is connected with input port 1 of WDM4.

As shown in FIG 5, in normal circumstances, the pass-through signal is input from side A, passes through WDM1 and WDM2, and is output from side B. The drop signal is input from side A, passes through WDM1, and then passes through the optical switch module 31 that is in state 1. In this case, port 3 is connected with port 4. Afterward, the drop signal passes through WDM4 and is output from the drop port on side C. The add signal is input from the add port on side C, passes through WDM3, passes through port 1 and port 2 that are connected with the optical switch module 31, and then passes through WDM2 and is output from side B. The dummy signal is input from the add port on side C, passes through WDM3, and then passes through WDM4 and is output from the drop port on side C.

For example, when a cable cut fault occurs on side C, the drop signal from side A to side C is unable to reach side C of the OADM BU 50, or the add signal from side C to side B is unable to reach side B of the OADM BU 50, and the communication is interrupted between side A and side C, and between side C and side B. In this case, the signal from side A to side B is affected. For example, the single-wavelength power is too high after the signal is amplified by the repeater. To keep normal communication between side A and side B, the state of the optical switch module 31 needs to switch to state 2. For example, a command (command) signal may be sent from side A or side B to the OADM BU 50 to change the state of the optical switch module 31. In this case, the signal flow direction is as follows: The flow direction of the pass-through signal keeps unchanged; the drop signal passes through WDM1, passes through port 3 and port 2 that are connected with the optical switch module 31, and then passes through WDM2, and is output from side B. In this case, after the pass-through signal is output from side B, the percentage of the power of the signal to the total optical power is the same as the percentage obtained in normal circumstances. Therefore, the original power level of the signal is maintained in the link, and the transmission performance keeps stable. In this way, a disaster recovery function on side C is implemented when a branch cable is cut.

Through the OADM BU in the submarine OADM system in this embodiment of the present invention, the OADM BU provides the features of simple structure and easy control, and the control method of the OADM BU is characterized by simplicity, little consumption of power, little occupation of space, independency of the number of added or dropped wavelengths of the OADM, and high capability of disaster recovery.

When an OADM BU includes two optical switch modules and 4 WDMs, and of the two optical switch modules, one is connected with the 4 WDMs in the same way as the connection of the OADM BU 30 in FIG. 3 and the other is connected with the 4 WDMs in the same way as the connection of the OADM BU 50 in FIG. 5, the OADM BU can implement trunk and branch disaster recovery by controlling each optical switch module to switch between two states.

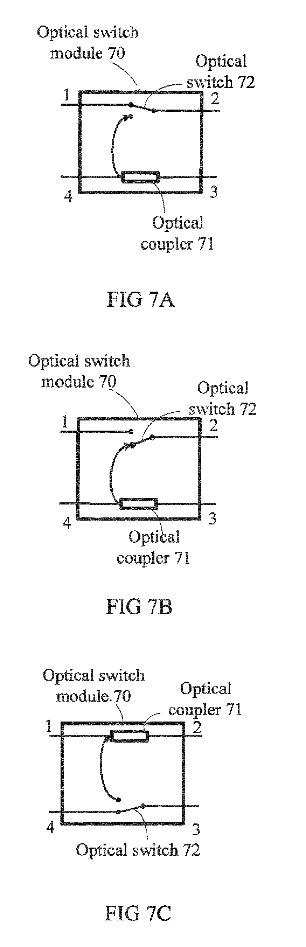

The optical switch module 31 of the OADM BU in the foregoing technical solution may be implemented through the function module that has two states shown in FIG. 4A to FIG 4D, or implemented in other ways. The optical module shown in FIG. 6 or FIG. 7A to FIG. 7D is an example.

FIG. 6 is a schematic diagram of an optical switch module 60 of an OADM BU according to an embodiment of the present invention.

As shown in FIG. 6, the optical switch module 60 includes a first optical coupler 61, a second optical coupler 62, and a light blocker 63.

The first coupler 61 includes 2 ports, and the second coupler 62 includes 2 ports. For ease of description, in the following connection relationship, each port is called an input port or an output port for differentiation. Whether the port is an input port or output port depends on the direction of a signal on the port of the optical switch module 60.

The input port of the first optical coupler 61 is connected with port 1 of the optical switch module 60; the output port of the first optical coupler 61 is connected with port 2; the input port of the second optical coupler 62 is connected with port 3; the output port of the second optical coupler 62 is connected with port 4; and the output port and the input port of the light blocker 63 are connected to the input port of the first optical coupler 61 and the output port of the second optical coupler 62, respectively.

In state 1, the light blocker 63 keeps disconnection between the input port of the first optical coupler 61 and the output port of the second optical coupler 62; in state 2, the light blocker 63 keeps connection between the input port of the first optical coupler 61 and the output port of the second optical coupler 62.

In state 1, port 1 is connected with port 2, and port 3 is connected with port 4 in the optical switch module 60. In state 2, port 1 is connected with port 4, and port 3 is connected with port 2 in the optical switch module 60 through the second optical coupler 62, the blocker 63, and the first optical coupler 61.

A variable optical attenuator (VOA, Variable Optical Attenuator) may be used as a light blocker, and is generally characterized by low power consumption. For example, the VOA based on an electric absorption technology in the prior art requires only a 5V drive voltage, a 65 mA drive current, so as to further reduce the power consumption.

Through the optical switch module in the OADM BU in this embodiment of the present invention, the OADM BU provides the features of simple structure and easy control, and the control method of the OADM BU is characterized by simplicity, little consumption of power, little occupation of space, independency of the number of added or dropped wavelengths of an OADM, and high capability of disaster recovery.

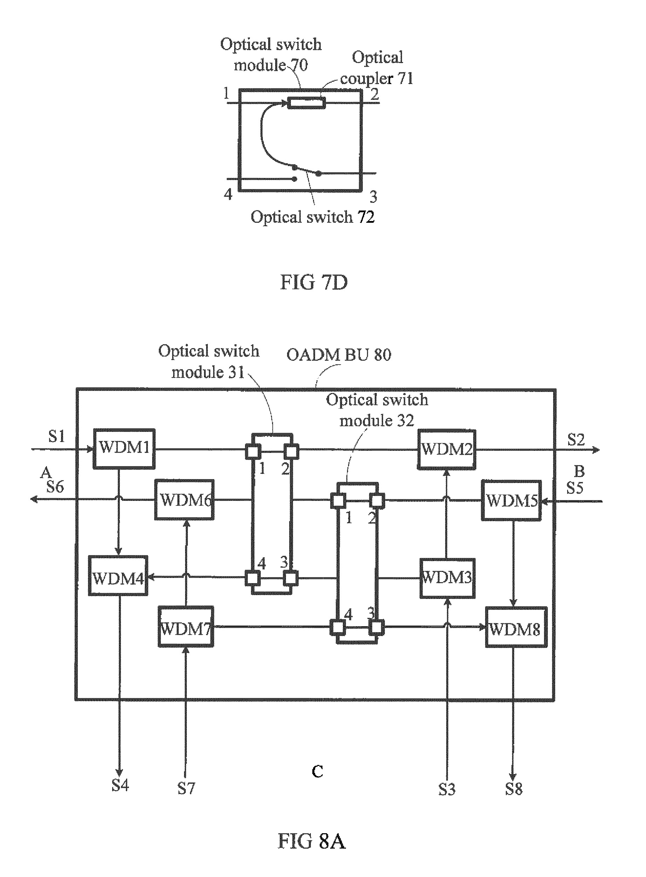

FIG. 7A to FIG 7D are schematic diagrams of an optical switch module 70 of an OADM BU according to an embodiment of the present invention. As shown in FIG. 7A to FIG. 7D, the optical switch module (Optical Switch module) 70 includes one optical coupler 71 and one optical switch (Optical Switch) 72. The difference lies in that FIG. 7A and FIG. 7B indicate state 1 and state 2 in a connection relationship, but FIG. 7C and FIG 7D indicate state 1 and state 2 in another connection relationship.

The optical switch 72 includes 3 ports. Whether one of the 3 ports is an input port or an output port depends on the direction of a signal on the port of the optical switch module 60. For ease of description, it is assumed that: In state 1, the signal is input from port 1 of the optical switch module 70; in state 2, the signal is input from port 3 of the optical switch module 70.

As shown in FIG 7A, the optical switch 72 includes input port 1, input port 2, and an output port. Input port 1 of the optical switch 72 is connected with port 1 of the optical switch module 70, the output port of the optical switch 72 is connected with port 2 of the optical switch module 70, input port 2 of the optical switch 72 is connected with the output port of the optical coupler 71, the output port of the optical coupler 71 is connected with port 4 of the optical switch module 70, and the input port of the optical coupler 71 is connected with port 3 of the optical switch module 70.

In state 1, as shown in FIG 7A, input port 1 of the optical switch 72 in state 1 is connected with the output port of the optical switch 72, port 1 is connected with port 2 and port 3 is connected with port 4 in the optical switch module 70; in state 2, as shown in FIG. 7B, input port 1 of the optical switch 72 in state 2 is disconnected from the output port of the optical switch 72, input port 2 of the optical switch 72 is connected with the output port of the optical switch 72, and port 3 of the optical switch module 70 is connected with port 2 of the optical switch module 70 through the optical coupler 71, input port 2 and the output port of the optical switch 72.

As shown in FIG. 7C, the optical switch 72 includes output port 1, output port 2, and an input port. The input port of the optical switch 72 is connected with port 3 of the optical switch module 70, output port 1 of the optical switch 72 is connected with port 4 of the optical switch module 70, output port 2 of the optical switch 72 is connected with the input port of the optical coupler, the input port of the optical coupler is connected with port 1 of the optical switch module 70, and the output port of the optical coupler is connected with port 2 of the optical switch module 70.

In state 1, as shown in FIG. 7C, port 1 of the optical switch module 70 is connected with port 2 of the optical switch module 70 through the optical coupler 71; the input port of the optical switch 72 in state 1 is connected with output port 1 of the optical switch 72, that is, port 3 is connected with port 4 of the optical switch module 70. In state 2, as shown in FIG. 7D, the input port of the optical switch 72 in state 2 is disconnected from output port 1 of the optical switch 72, the input port of the optical switch 72 is connected with output port 2 of the optical switch 72, and port 3 of the optical switch module 70 is connected with port 2 of the optical switch module 70 through the input port and output port 2 of the optical switch, and the optical coupler 71.

Through the optical switch module in the OADM BU in this embodiment of the present invention, the OADM BU provides the features of simple structure and easy control, and the control method of the OADM BU is characterized by simplicity, little consumption of power, little occupation of space, independency of the number of added or dropped wavelengths of an OADM, and high capability of disaster recovery.

FIG. 8A to FIG. 8C are schematic diagrams of using an OADM BU 80 to implement trunk disaster recovery according to an embodiment of the present invention. The OADM BU 80 includes two basic units, namely, the OADM BUs 30 shown in FIG. 3. One group is WDM1-WDM4 and the optical switch module 31 (or also referred to as the first switch module in certain contexts); and the other group is WDM5-WDM8 and the optical switch module 32 (or also referred to as the second switch module in certain contexts), where the two groups are applied to different directions of the same fiber pair, respectively, and are mutually mirrored.

Signals S5-S8 correspond to S1-S4. S5 represents a fifth signal input from side B to the OADM BU 80, including a pass-through signal between side B and side A, and/or a drop signal from side B to side C. S6 is a sixth signal output from the OADM BU 80 to side A, including a pass-through signal from side B to side A, and/or an add signal from side C to side B. S7 is a seventh signal input from an add port on side C to the OADM BU 80, including an add signal and/or a dummy signal. S8 is a eighth signal output from the OADM BU 80 to a drop port on side C, including a drop signal and/or a dummy signal.

The input port of WDM1 is connected with a first signal, output port 1 of WDM1 is connected with port 1 of the optical switch module 31, and output port 2 of WDM1 is connected with input port 1 of WDM4.

Input port 1 of WDM2 is connected with port 2 of the optical switch module 31, input port 2 of WDM2 is connected with output port 1 of WDM3, and the output port of WDM2 is connected with a second signal.

The input port of WDM3 is connected with a third signal, output port 1 of WDM3 is connected with input port 2 of WDM2, and output port 2 of WDM3 is connected with port 3 of the optical switch module 31.

Input port 1 of WDM4 is connected with output port 2 of WDM1, input port 2 of WDM4 is connected with port 4 of the optical switch module 31, and the output port of WDM4 is connected with a fourth signal.

Port 1 of the optical switch module 31 is connected with output port 1 of WDM1, port 2 of the optical switch module 31 is connected with input port 1 of WDM2, port 3 of the optical switch module 31 is connected with output port 2 of WDM3, and port 4 of the optical switch module 31 is connected with input port 2 of WDM4.

The input port of WDM5 is connected with a fifth signal, output port 1 of WDM5 is connected with port 2 of the optical switch module 32, and output port 2 of WDM5 is connected with input port 1 of WDM6.

Input port 1 of WDM6 is connected with port 1 of the optical switch module 32, input port 2 of WDM6 is connected with output port 1 of WDM7, and the output port of WDM6 is connected with a sixth signal.

The input port of WDM7 is connected with a seventh signal, output port 1 of WDM7 is connected with input port 2 of WDM6, and output port 2 of WDM7 is connected with port 4 of the optical switch module 32.

Input port 1 of WDM8 is connected with output port 2 of WDM5, input port 2 of WDM8 is connected with port 3 of the optical switch module 32, and the output port of WDM8 is connected with an eighth signal.

Port 1 of the optical switch module 32 is connected with input port 1 of WDM6, port 2 of the optical switch module 32 is connected with output port 1 of WDM5, port 3 of the optical switch module 32 is connected with input port 2 of WDM8, and port 4 of the optical switch module 32 is connected with output port 2 of WDM7.

In FIG. 8A, the optical switch module 31 and the optical switch module 32 of the OADM BU 80 work in state 1, indicating the working state of the OADM BU 80 when a submarine cable network works normally.

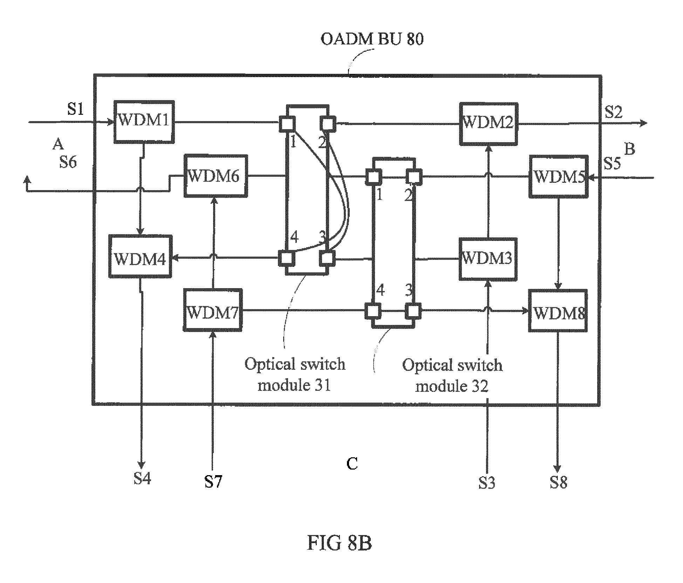

In FIG. 8B, when the signal S1 on side A of the submarine cable network is faulty, the optical switch module 31 of the OADM BU 80 works in state 2, and the optical switch module 32 works in state 1. In this case, from side C to side B, the dummy signal passes through port 3 and port 2 of the optical switch module 31 that are connected with each other, and passes through WDM2, and then is output from side B, which makes up for the lost pass-through signal from side A to side B, and keeps a constant percentage of the power of the add signal from side C to side B.

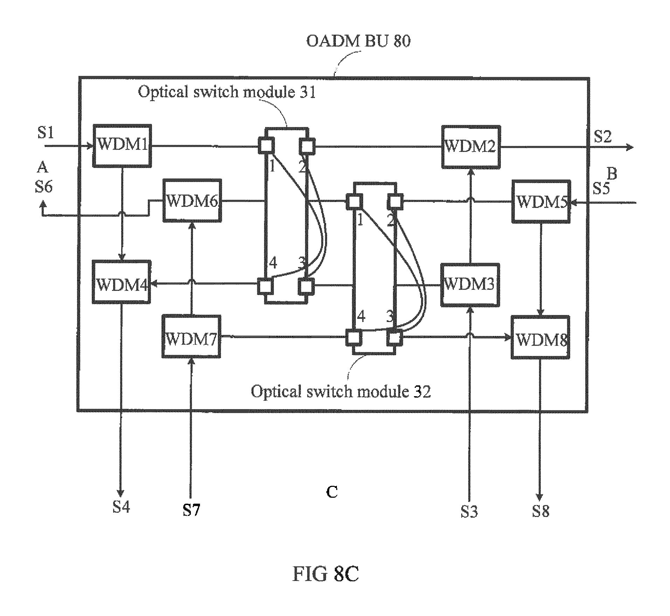

Unlike FIG. 8B, when the signal S1 on side A of the submarine cable network is faulty, the optical switch module 31 and the optical switch module 32 of the OADM BU 80 in FIG. 8C work in state 2 simultaneously. In this case, the dummy signal from side C to side B passes through WDM3, passes through port 3 and port 2 that are connected with the optical switch module 31, and passes through WDM2 and then is output from side B, which makes up for the lost pass-through signal from side A to side B, and keeps a constant percentage of the power of the add signal from side C to side B. Meanwhile, the original pass-through signal light from side B to side A also passes through WDM5 as well as port 2 and port 3 that are connected with the optical switch module 32, passes through the WDM8 again, and is looped back to side C and output from side C. If another standby route exists between site C and site A, the dummy signal in S3 may be replaced with the pass-through signal from A to B, thereby forming a bidirectional pass-through route from A through C to B, and making up for the A-to-B pass-through traffic loss caused by cable cut on side A.

Similarly, when the signal S5 on side B is faulty, the optical switch modules 31 and 32 are mirrored to the optical switch modules 31 and 32 shown in each of FIG 8B and FIG. 8C. To avoid repeated description, the accompanying drawing is omitted here.

The OADM BU in this embodiment of the present invention provides the features of simple structure and easy control, and the control method of the OADM BU is characterized by simplicity, little consumption of power, little occupation of space, independency of the number of added or dropped wavelengths of an OADM, and high capability of disaster recovery.

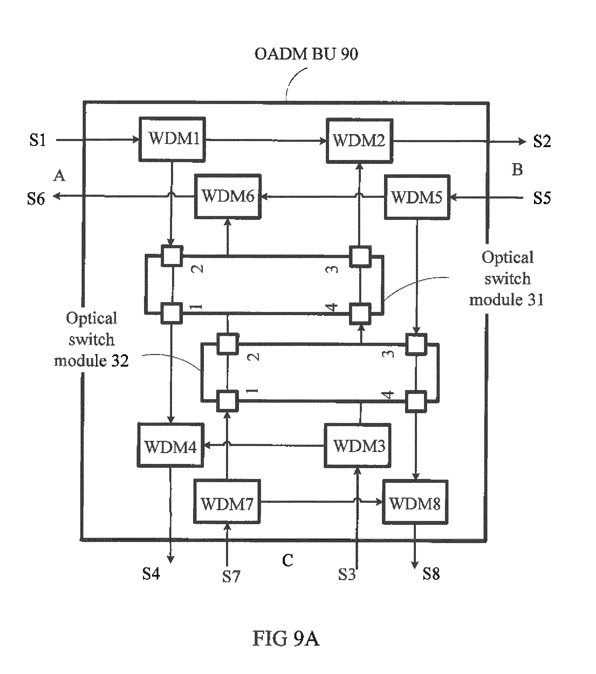

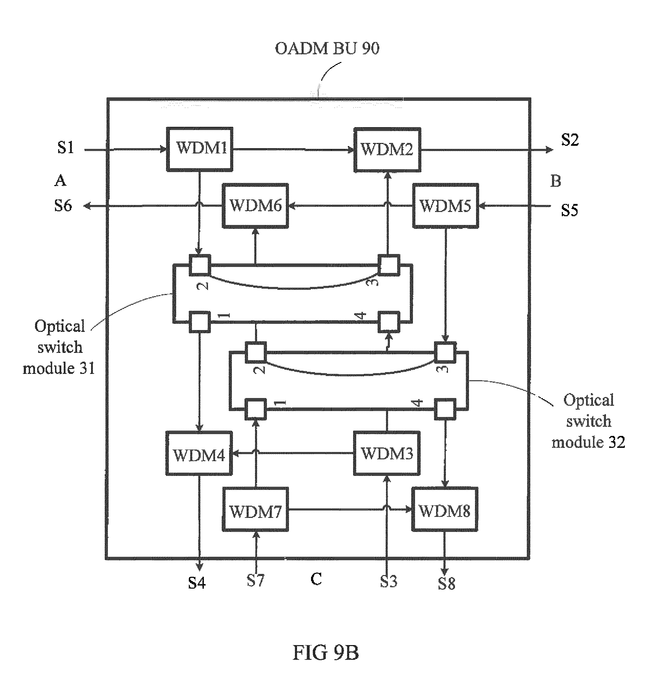

FIG. 9A and FIG. 9B are schematic diagrams of using an OADM BU to implement branch disaster recovery according to an embodiment of the present invention. An OADM BU 90 includes two basic units, namely, the OADM BUs 50 shown in FIG. 5. One group is WDM1-WDM4 and the optical switch module 31; and the other group is WDM5-WDM8 and the optical switch module 32, where the two groups are connected onto the bidirectional fiber pair on side A and side B.

The input port of WDM1 is connected with a first signal, output port 1 of WDM1 is connected with the input port of WDM2, and output port 2 of WDM1 is connected with port 2 of the optical switch module 31.

Input port 1 of WDM2 is connected with output port 1 of WDM1, input port 2 of WDM2 is connected with port 3 of the optical switch module 31, and the output port of WDM2 is connected with a second signal.

The input port of WDM3 is connected with a third signal, output port 1 of WDM3 is connected with port 4 of the optical switch module 31, and output port 2 of WDM3 is connected with input port 2 of WDM4.

Input port 1 of WDM4 is connected with port 1 of the optical switch module 31, input port 2 of WDM4 is connected with output port 2 of WDM3, and the output port of WDM4 is connected with a fourth signal.

Port 1 of the optical switch module 31 is connected with input port 1 of WDM4, port 2 of the optical switch module 31 is connected with output port 2 of WDM1, port 3 of the optical switch module 31 is connected with input port 2 of WDM2, and port 4 is connected with output port 1 of WDM3.

The input port of WDM5 is connected with a fifth signal, output port 1 of WDM5 is connected with the input port of WDM6, and output port 2 of WDM5 is connected with port 3 of the optical switch module 32.

Input port 1 of WDM6 is connected with output port 1 of WDM5, input port 2 of WDM6 is connected with port 2 of the optical switch module 32, and the output port of WDM6 is connected with a sixth signal.

The input port of WDM7 is connected with a seventh signal, output port 1 of WDM7 is connected with port 1 of the optical switch module 32, and output port 2 of WDM7 is connected with input port 2 of WDM8.

Input port 1 of WDM8 is connected with port 4 of the optical switch module 32, input port 2 of WDM8 is connected with output port 2 of WDM7, and the output port of WDM8 is connected with an eighth signal.

Port 1 of the optical switch module 32 is connected with output port 1 of WDM7, port 2 of the optical switch module 32 is connected with input port 2 of WDM6, port 3 of the optical switch module 32 is connected with output port 2 of WDM5, and port 4 of the optical switch module 32 is connected with input port 1 of WDM8.

In FIG 9A, the optical switch module 31 and the optical switch module 32 of the OADM BU 90 work in state 1. That is, port 1 is connected with port 2, and port 3 is connected with port 4. FIG. 9A shows the working state of the OADM BU 90 when a submarine cable network works normally.

In FIG. 9B, the optical switch module 31 and the optical switch module 32 of the OADM BU 90 work in state 2. That is, port 2 is connected with port 3, and port 1 is disconnected from port 2, and port 3 is disconnected from port 4. FIG. 9B shows the working state of the OADM BU 90 when the signals S3 and S7 from side C in a submarine cable network are faulty at the same time.

The OADM BU in this embodiment of the present invention provides the features of simple structure and easy control, and the control method of the OADM BU is characterized by simplicity, little consumption of power, little occupation of space, independency of the number of added or dropped wavelengths of an OADM, and high capability of disaster recovery.

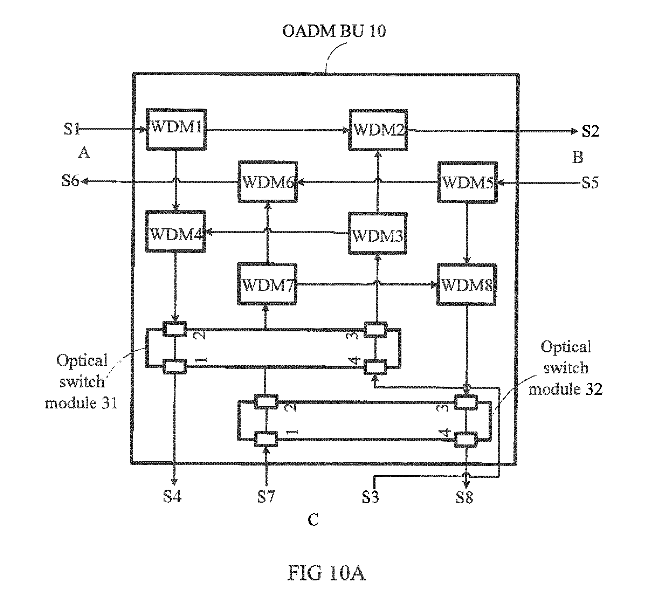

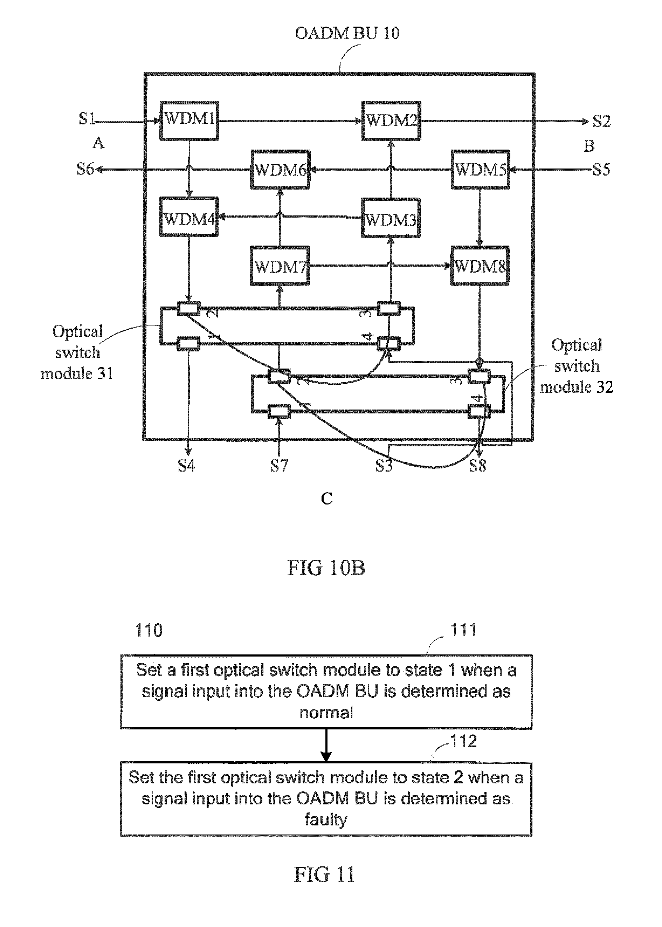

FIG. 10A and FIG. 10B are schematic diagrams of using an OADM BU 10 to implement branch disaster recovery according to another embodiment of the present invention. OADM BU 10 is an equivalent substitute for the OADM BU 90. The difference lies in the connection relationship between WDMs and optical switch modules inside the OADM BU.

The input port of WDM1 is connected with a first signal, output port 1 of WDM1 is connected with the input port of WDM2, and output port 2 of WDM1 is connected with input port 1 of WDM4.

Input port 1 of WDM2 is connected with output port 1 of WDM1, input port 2 of WDM2 is connected with output port 1 of WDM3, and the output port of WDM2 is connected with a second signal.

The input port of WDM3 is connected with port 3 of the optical switch module 31, output port 1 of WDM3 is connected with input port 2 of WDM2, and output port 2 of WDM3 is connected with input port 2 of WDM4.

Input port 1 of WDM4 is connected with output port 2 of WDM1, input port 2 of WDM4 is connected with output port 2 of WDM3, and the output port of WDM4 is connected with port2 of the optical switch module 31.

Port 1 of the optical switch module 31 is connected with a fourth signal, port 2 of the optical switch module 31 is connected with the output port of WDM4, port 3 of the optical switch module 31 is connected with the input port of WDM3, and port 4 of the optical switch module 31 is connected with a third signal.

The input port of WDM5 is connected with a fifth signal, output port 1 of WDM5 is connected with the input port of WDM6, and output port 2 of WDM5 is connected with input port 1 of WDM8.

Input port 1 of WDM6 is connected with output port 1 of WDM5, input port 2 of WDM6 is connected with output port 1 of WDM7, and the output port of WDM6 is connected with a sixth signal.

The input port of WDM7 is connected with port 2 of the optical switch module 32, output port 1 of WDM7 is connected with input port 2 of WDM6, and output port 2 of WDM7 is connected with input port 2 of WDM8.

Input port 1 of WDM8 is connected with output port 2 of WDM5, input port 2 of WDM8 is connected with output port 2 of WDM7, and the output port of WDM8 is connected with port3 of the optical switch module 32.

Port 1 of the optical switch module 32 is connected with a seventh signal, port 2 of the optical switch module 32 is connected with the input port of WDM7, port 3 of the optical switch module 32 is connected with the output port of WDM8, and port 4 of the optical switch module 32 is connected with an eighth signal.

In FIG 10A, the optical switch module 31 and the optical switch module 32 of the OADM BU 10 work in state 1. That is, port 1 is connected with port 2, and port 3 is connected with port 4. FIG. 10A shows the working state of the OADM BU 10 when a submarine cable network works normally.

In FIG. 10B, the optical switch module 31 and the optical switch module 32 of the OADM BU 10 work in state 2. That is, port 2 is connected with port 3, and port 1 is disconnected from port 2, and port 3 is disconnected from port 4. FIG. 9B shows the working state of the OADM BU 10 when the signals S3 and S7 from side C in the submarine cable network are faulty at the same time.

The OADM BU in this embodiment of the present invention provides the features of simple structure and easy control, and the control method of the OADM BU is characterized by simplicity, little consumption of power, little occupation of space, independency of the number of added or dropped wavelengths of an OADM, and high capability of disaster recovery.

FIG. 11 is a flowchart of a control method 110 of an OADM BU according to an embodiment of the present invention.

The control method 110 includes:
111. Set a first optical switch module to state 1 when the signal input into the OADM BU is determined as normal.
112. Set the first optical switch module to state 2 when the signal input into the OADM BU is determined as faulty.

The way of determining whether the signal input into the OADM BU is normal in the control method 110 is the same as that in the prior art. The OADM BU in the foregoing solution, such as OADM BU 30 or OADM BU 80, can be used to implement control for trunk disaster recovery, and the OADM BU 50, OADM BU 90, or OADM BU 10 can be used to implement control for branch disaster recovery. When the OADM BU 80 and the OADM BU 90 or the OADM BU 80 and the OADM BU 10 for trunk disaster recovery are integrated in the same OADM BU structure, that is, the structure includes WDM1-WDM8 and 4 optical switch modules, the OADM BU of such a structure can implement both trunk disaster recovery and branch disaster recovery in a pair of fibers. The details are not repeated here.

The control method applied when a submarine OADM system is faulty is provided in this embodiment of the present invention, and is characterized by simple control, little consumption of power, little occupation of space, independency of the number of added or dropped wavelengths of an OADM, and high capability of disaster recovery.

Persons of ordinary skill in the art may be aware that the exemplary units and algorithm steps described in conjunction with the embodiments disclosed herein can be implemented by electronic hardware, or a combination of computer software and electronic hardware. Whether these functions are performed by using hardware or software depends on particular applications and design constraints of the technical solutions. Persons skilled in the art may use different methods to implement the described functions for each specific application. However, such implementation should not be considered as beyond the scope of the present invention.

It can be clearly understood by persons skilled in the art that, for the purpose of convenient and brief description, for the detailed working process of the foregoing system, apparatus and unit, reference may be made to the corresponding process in the method embodiment, and details will not be described herein again.

In the embodiments provided in the present application, it should be understood that the disclosed system, device, and method may be implemented in other manners. For example, the described device embodiments are merely exemplary. For example, the unit division is merely logical function division and can be other division in actual implementation. For example, multiple units or components can be combined or integrated into another system, or some features can be ignored or not performed. In addition, the displayed or discussed mutual couplings or direct couplings or communication connections are implemented through some interfaces. The indirect couplings or communication connections between the devices or units may be implemented in electronic, mechanical or other forms.

The units described as separate parts may or may not be physically separate, and parts displayed as units may or may not be physical units, may be located in one position, or may be distributed on multiple network elements. A part or all of the units may be selected according to actual needs to achieve the objectives of the solutions of the embodiments.

In addition, function units in each embodiment of the present invention may be integrated into one processing unit, or each of the units may exist alone physically, or two or more units are integrated into one unit.

When being implemented in the form of a software function unit and sold or used as a stand-alone product, the functions may be stored in a computer-readable storage medium. Based on such understanding, the essence of the technical solutions of the present invention, or the part that makes contributions to the prior art, or the part of the technical solution may be embodied in the form of a software product. The computer software product may be stored in a storage medium, and incorporates several instructions for instructing a computer apparatus (for example, personal computer, server, or network apparatus) to execute all or part of the steps of the method in each embodiment of the present invention. The storage medium includes: any medium that can store program code, such as a U-disk, a removable hard disk, a read-only memory (ROM, Read-Only Memory), a random access memory (RAM, Random Access Memory), a magnetic disk, or a CD-ROM.

The above description is merely exemplary embodiments of the present invention, but not intended to limit the protection scope of the present invention. Any modifications, variations or replacement that can be easily derived by those skilled in the art within the technical scope disclosed by the present invention shall fall within the protection scope of the present invention. Therefore, the protection scope of the present invention is subject to the appended claims.

## Claims

1. An optical add-drop multiplexer branching unit OADM BU, comprising:
4 wavelength division multiplexers WDM1 to WDM4 and a first optical switch module, wherein
WDM1-WDM4 are configured to divide and combine wavelengths of signals;
the first optical switch module is configured to control connection and disconnection of signals that leave or enter the WDM;
the first optical switch module comprises port 1 to port 4; the ports are connected with input ports or output ports of WDM1 to WDM4, respectively; states of internal connection between the ports comprise state 1 and state 2; in state 1, port 1 is connected with port 2, and port 3 is connected with port 4; in state 2, port 3 is connected with port 2, or port 4 is connected with port 1, or port 3 is connected with port 2 and port 4 is connected with port 1, wherein
the first optical switch module is set to state 1 when a signal input into the OADM BU is detected as normal; or
the first optical switch module is set to state 2 when a signal input into the OADM BU is detected as faulty.

2. The optical add-drop multiplexer branching unit according to claim 1, wherein:
an input port of WDM1 is connected with a first signal, output port 1 of WDM1 is connected with port 1 of the first optical switch module, and output port 2 of WDM1 is connected with input port 1 of WDM4;
input port 1 of WDM2 is connected with port 2 of the first optical switch module, input port 2 of WDM2 is connected with output port 1 of WDM3, and an output port of WDM2 is connected with a second signal;
an input port of WDM3 is connected with a third signal, output port 1 of WDM3 is connected with input port 2 of WDM2, and output port 2 of WDM3 is connected with port 3 of the first optical switch module;
input port 1 of WDM4 is connected with output port 2 of WDM1, input port 2 of WDM4 is connected with port 4 of the first optical switch module, and an output port of WDM4 is connected with a fourth signal; and
port 1 of the first optical switch module is connected with output port 1 of WDM1, port 2 of the first optical switch module is connected with input port 1 of WDM2, port 3 of the first optical switch module is connected with output port 2 of WDM3, and port 4 is connected with input port 2 of WDM4.

3. The optical add-drop multiplexer branching unit according to claim 1, wherein:
an input port of WDM1 is connected with a first signal, output port 1 of WDM1 is connected with an input port of WDM2, and output port 2 of WDM1 is connected with port 3 of the first optical switch module;
input port 1 of WDM2 is connected with output port 1 of WDM1, input port 2 of WDM2 is connected with port 2 of the first optical switch module, and an output port of WDM2 is connected with a second signal;
an input port of WDM3 is connected with a third signal, output port 1 of WDM3 is connected with port 1 of the first optical switch module, and output port 2 of WDM31 is connected with input port 2 of WDM4;
Input port 1 of WDM4 is connected with port 4 of the first optical switch module, input port 2 of WDM4 is connected with output port 2 of WDM3, and an output port of WDM4 is connected with a fourth signal;
port 1 of the first optical switch module is connected with output port 1 of WDM3, port 2 of the first optical switch module is connected with input port 2 of WDM2, port 3 of the first optical switch module is connected with output port 2 of WDM1, and port 4 is connected with input port 1 of WDM4.

4. The optical add-drop multiplexer branching unit according to claim 1, further comprising:
4 wavelength division multiplexers WDM5 to WDM8 and a second optical switch module, wherein
an input port of WDM1 is connected with a first signal, output port 1 of WDM1 is connected with port 1 of the first optical switch module, and output port 2 of WDM1 is connected with input port 1 of WDM4;
input port 1 of WDM2 is connected with port 2 of the first optical switch module, input port 2 of WDM2 is connected with output port 1 of WDM3, and an output port of WDM2 is connected with a second signal;
an input port of WDM3 is connected with a third signal, output port 1 of WDM3 is connected with input port 2 of WDM2, and output port 2 of WDM3 is connected with port 3 of the first optical switch module;
input port 1 of WDM4 is connected with output port 2 of WDM1, input port 2 of WDM4 is connected with port 4 of the first optical switch module, and an output port of WDM4 is connected with a fourth signal;
port 1 of the first optical switch module is connected with output port 1 of WDM1, port 2 of the first optical switch module is connected with input port 1 of WDM2, port 3 of the first optical switch module is connected with output port 2 of WDM3, and port 4 is connected with input port 2 of WDM4;
an input port of WDM5 is connected with a fifth signal, output port 1 of WDM5 is connected with port 2 of the second optical switch module, and output port 2 of WDM5 is connected with input port 1 of WDM6;
input port I of WDM6 is connected with port 1 of the second optical switch module, input port 2 of WDM6 is connected with output port 1 of WDM7, and an output port of WDM6 is connected with a sixth signal;
an input port of WDM7 is connected with a seventh signal, output port 1 of WDM7 is connected with input port 2 of WDM6, and output port 2 of WDM7 is connected with port 4 of the second optical switch module;
input port 1 of WDM8 is connected with output port 2 of WDM5, input port 2 of WDM8 is connected with port 3 of the second optical switch module, and an output port of WDM8 is connected with an eighth signal; and
port 1 of the second optical switch module is connected with input port 1 of WDM6, port 2 of the second optical switch module is connected with output port 1 of WDM5, port 3 of the second optical switch module is connected with input port 2 of WDM8, and port 4 of the second optical switch module is connected with output port 2 of WDM7.

5. The optical add-drop multiplexer branching unit according to claim 1, further comprising:
4 wavelength division multiplexers WDM5 to WDM8 and a second optical switch module, wherein
an input port of WDM1 is connected with a first signal, output port 1 of WDM1 is connected with an input port of WDM2, and output port 2 of WDM1 is connected with port 2 of the first optical switch module;
input port 1 of WDM2 is connected with output port 1 of WDM1, input port 2 of WDM2 is connected with port 3 of the first optical switch module, and an output port of WDM2 is connected with a second signal;
an input port of WDM3 is connected with a third signal, output port 1 of WDM3 is connected with port 4 of the first optical switch module, and output port 2 of WDM3 is connected with input port 2 of WDM4;
input port 1 of WDM4 is connected with port 1 of the first optical switch module, input port 2 of WDM4 is connected with output port 2 of WDM3, and an output port of WDM4 is connected with a fourth signal;
port 1 of the first optical switch module is connected with input port 1 of WDM4, port 2 of the first optical switch module is connected with output port 2 of WDM1, port 3 of the first optical switch module is connected with input port 2 of WDM2, and port 4 of the first optical switch module is connected with output port 1 of WDM3;
an input port of WDM5 is connected with a fifth signal, output port 1 of WDM5 is connected with an input port of WDM6, and output port 2 of WDM5 is connected with port 3 of the second optical switch module;
input port 1 of WDM6 is connected with output port 1 of WDM5, input port 2 of WDM6 is connected with port 2 of the second optical switch module, and an output port of WDM6 is connected with a sixth signal;
an input port of WDM7 is connected with a seventh signal, output port 1 of WDM7 is connected with port 1 of the second optical switch module, and output port 2 of WDM7 is connected with input port 2 of WDM8;
input port 1 of WDM8 is connected with port 4 of the second optical switch module, input port 2 of WDM8 is connected with output port 2 of WDM7, and an output port of WDM8 is connected with an eighth signal; and
port 1 of the second optical switch module is connected with output port 1 of WDM7, port 2 of the second optical switch module is connected with input port 2 of WDM6, port 3 of the second optical switch module is connected with output port 2 of WDM5, and port 4 of the second optical switch module is connected with input port 1 of WDM8.

6. The optical add-drop multiplexer branching unit according to claim 1, further comprising:
4 wavelength division multiplexers WDM5 to WDM8 and a second optical switch module, wherein
an input port of WDM1 is connected with a first signal, output port 1 of WDM1 is connected with an input port of WDM2, and output port 2 of WDM1 is connected with input port 1 of WDM4;
input port 1 of WDM2 is connected with output port 1 of WDM1, input port 2 of WDM2 is connected with output port 1 of WDM3, and an output port of WDM2 is connected with a second signal;
an input port of WDM3 is connected with port 3 of the first optical switch module, output port 1 of WDM3 is connected with input port 2 of WDM2, and output port 2 of WDM3 is connected with input port 2 of WDM4;
input port 1 of WDM4 is connected with output port 2 of WDM1, input port 2 of WDM4 is connected with output port 2 of WDM3, and an output port of WDM4 is connected with port2 of the first optical switch module;
port 1 of the first optical switch module is connected with a fourth signal, port 2 of the first optical switch module is connected with an output port of WDM4, port 3 of the first optical switch module is connected with an input port of WDM3, and port 4 of the first optical switch module is connected with a third signal;
an input port of WDM5 is connected with a fifth signal, output port 1 of WDM5 is connected with an input port of WDM6, and output port 2 of WDM5 is connected with input port 1 of WDM8;
input port 1 of WDM6 is connected with output port 1 of WDM5, input port 2 of WDM6 is connected with output port 1 of WDM7, and an output port of WDM6 is connected with a sixth signal;
an input port of WDM7 is connected with port 2 of the second optical switch module, output port 1 of WDM7 is connected with input port 2 of WDM6, and output port 2 of WDM7 is connected with input port 2 of WDM8;
input port 1 of WDM8 is connected with output port 2 of WDM5, input port 2 of WDM8 is connected with output port 2 of WDM7, and an output port of WDM8 is connected with port3 of the second optical switch module; and
port 1 of the second optical switch module is connected with a seventh signal, port 2 of the second optical switch module is connected with an input port of WDM7, port 3 of the second optical switch module is connected with an output port of WDM8, and port 4 of the second optical switch module is connected with an eighth signal.

7. The optical add-drop multiplexer branching unit according to claim 1, wherein:
the optical switch module comprises a first optical coupler, a second optical coupler, and a light blocker, wherein
an input port of the first optical coupler is connected with port 1 of the optical switch module; an output port of the first optical coupler is connected with port 2; an input port of the second optical coupler is connected with port 3; an output port of the second optical coupler is connected with port 4; and an output port and an input port of the light blocker are connected to the input port of the first optical coupler and the output port of the second optical coupler, respectively;
in state 1, the light blocker keeps disconnection between the input port of the first optical coupler and the output port of the second optical coupler; in state 2, the light blocker keeps connection between the input port of the first optical coupler and the output port of the second optical coupler.

8. The optical add-drop multiplexer branching unit according to claim 1, wherein:
the optical switch module comprises 1 optical coupler and 1 optical switch, wherein
the optical switch comprises input port 1, input port 2, and an output port, wherein: input port 1 of the optical switch is connected with port 1 of the optical switch module, the output port of the optical switch is connected with port 2 of the optical switch module, input port 2 of the optical switch is connected with an output port of the optical coupler, the output port of the optical coupler is connected with port 4 of the optical switch module, and an input port of the optical coupler is connected with port 3 of the optical switch module;
in state 1, input port 1 is connected with the output port in the optical switch; in state 2, input port 1 is disconnected from the output port and input port 2 is connected with the output port in the optical switch.

9. The optical add-drop multiplexer branching unit according to claim 1, wherein:
the optical switch module comprises 1 optical coupler and 1 optical switch, wherein
the optical switch comprises output port 1, output port 2, and an input port, wherein: the input port of the optical switch is connected with port 3 of the optical switch module, output port 1 of the optical switch is connected with port 4 of the optical switch module, output port 2 is connected with an input port of the optical coupler, the input port of the optical coupler is connected with port 1 of the optical switch module, and an output port of the optical coupler is connected with port 2 of the optical switch module; and
in state 1, output port 1 is connected with the input port in the optical switch; in state 2, output port 1 is disconnected from the output port and output port 2 is connected with the input port in the optical switch.

10. A control method of the optical add-drop multiplexer branching unit according to any one of claims 1-9, wherein:
the optical add-drop multiplexer branching unit comprises 4 wavelength division multiplexers WDM1 to WDM4 and a first optical switch module, wherein: the first optical switch module comprises port 1 to port 4; the ports are connected with input ports or output ports of WDM1 to WDM4, respectively; states of internal connection between the ports comprise state 1 and state 2; in state 1, port 1 is connected with port 2, and port 3 is connected with port 4; in state 2, port 3 is connected with port 2, or port 4 is connected with port 1, or port 3 is connected with port 2 and port 4 is connected with port 1; and the method comprises:
setting the optical switch module to state 1 when a signal input into the optical add-drop multiplexer branching unit is determined as normal;
setting the optical switch module to state 2 when a signal input into the optical add-drop multiplexer branching unit is determined as faulty.
